# EUROPEAN PATENT SPECIFICATION

(11) **EP 2 430 099 B1**
(45) Date of publication and mention of the grant of the patent: **31.07.2013**
(21) Application number: 10721680.6
(22) Date of filing: 08.05.2010
(51) Int. Cl.: C09B 29/01, C09B 29/10, C09B 29/16

(54) **ORGANIC COMPOUNDS**
ORGANISCHE VERBINDUNGEN
Composés organiques

(30) Priority: 14.05.2009 EP 09160236
(43) Date of publication of application: 21.03.2012
(73) Proprietor: Clariant Finance (BVI) Limited, Road Town, Tortola (VG)
(72) Inventor: NUSSER, Rainer, 79395 Neuenburg (DE); GEIGER, Ulrich, 79395 Neuenburg/Rhein (DE); HASEMANN, Ludwig, 79379 Muellheim-Niederweiler (DE)
(74) Representative: Hütter, Klaus
(86) International application number: PCT/EP2010/002840
(87) International publication number: WO 2010/130381

(56) References cited:
- JP-A- 61 043 673
- US-A- 3 230 086
- DATABASE BEILSTEIN [Online] BEILSTEIN INSTITUTE FOR ORGANIC CHEMISTRY, FRANKFURT-MAIN, DE; 1918, XP002545877 Database accession no. BRN:3509638
- DATABASE CA [Online] CHEMICAL ABSTRACTS SERVICE, COLUMBUS, OHIO, US; 1950, KREPELKA, V. ET AL: "Relation between constitution and tinctorial properties of substantive azoic dyes" XP002545878 retrieved from STN Database accession no. 1951:40188 & COLLECTION OF CZECHOSLOVAK CHEMICAL COMMUNICATIONS , 15, 412-32 CODEN: CCCCAK; ISSN: 0010-0765, 1950,

## Description

The invention relates to novel acid dyes, a process for their preparation and their use for dyeing organic substrates.

Acid dyes are known and dyes with bridging members are known as well.

The article "Stebbins, Chemisches Zentralblatt 89, II, 1918, 955" investigates the usefulness of tetrazodi-o-tolylmethan as a dyestuff.

US 3,230,086 A discloses 4-methoxy-2-hydroquinonylsulfonat-phenylazo-1-naphthol for photographic processes.

The article "Krepelka et al., Collection of Czechoslovak Chemical Communications (1950), 15,412 - 32" discloses 7-amino-3-[2-[4-[(((4-aminophenyl)amino)carbonyl)amino)phenyl)-diazenyl]-4-hydroxy-2-naphthalene-sulfonic acid as a dye for dyeing cotton.

JP 61-043673 A discloses a water-based ink containing specific water-soluble bridged naphthol azo dyes.

However, there is still a need for acid dyes with improved properties.

The invention provides compounds of the general formula (I) 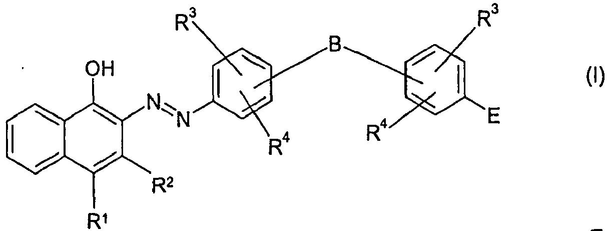
- B: signifies a group with the formula-SO₂-or-CR⁵R⁶-,
- E: signifies NH₂ or OH
- R¹: signifies H or a sulpho group
- R²: signifies H or a sulpho group, R¹ has to be different from R².
- R³: signifies H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group,
- R⁴: signifies H, a substituted C₁ to C₄ alkyl group or an unsubstituted C₁ to C₄ alkyl group, a substituted C₁ to C₄ alkoxy group or an unsubstituted C₁ to C₄ alkoxy group,
- R⁵: signifies H, substituted C₁ to C₉ alkyl group or an unsubstituted C₁ to C₉ alkyl group,
- R⁶: signifies H, a substituted C₁ to C₉ alkyl group or an unsubstituted C₁ to C₉ alkyl group, an unsubstituted aryl group or a substituted aryl group or R⁵ and R⁶ form together a five or six membered cyclo aliphatic ring, wherein the five or six membered rings are substituted by a C₁ to C₄ alkyl group or the five or six membered rings are not further substituted,

By preference, the sum of carbon atoms of R⁵ and R⁶ together is at least 4 carbon atoms, more preferred R³ and R⁴ have together at least 5 carbon atoms. Even more preferred, the sum of carbon atoms of R³ and R⁴ together is 5 or 6 or 7 or 8 or 9 carbon atoms.

The preferred compounds of formula (I) bear at least one anionic substituent, preferably 1 or 2 or 3 anionic substituents, of which 2 anionic substituents are very particularly preferred. Preferably the at least one anionic substituent are part of the substituents R¹ or R² or the at least one anionic substituent are selected from R¹ or R². This means that preferably R³, R⁴, R⁵ or R⁶ do not signify -SO₃H nor do R³, R⁴, R⁵ or R⁶ bear any -SO₃H group.

The at least one anionic substituent in the compounds of formula (I) are located by preference in one of the substituents R¹ or R², more preferred, the at least one anionic substituent is located in one of the substituents R¹.

Preferred anionic substituents are sulpho groups.

The preferred substituents of the substituted C₁ to C₄ alkyl groups are selected from the following substituents -OH, -O(C₁ to C₄ - Alkyl), -SO₃H, -COOH, -NH(C₁ to C₄ - Alkyl). The more preferred substituents of the substituted C₁ to C₄ alkyl groups are selected from the following substituents -OH, -O(C₁ to C₄ - Alkyl), -NH(C₁ to C₄ - Alkyl). The alkyl groups groups are branched or linear. The most preferred alkyl groups are methyl, ethyl, propyl, iso-proply, butyl, iso-butyl (2-Methylpropyl), pentyl, iso-pentyl (3-Methylbutyl, hexyl, heptyl, octyl, or nonyl.

The preferred substituents of the substituted C₁ to C₄ alkoxy group are selected from the following substituents -OH, -O(C₁ to C₄ - Alkyl), -NH(C₁ to C₄ - Alkyl). The the alkoxy groups are branched or linear.

Preferred substituents of the substituted aryl groups are selected from the following substituents -OH, -O(C₁ to C₄ - Alkyl), -SO₃H, substituted C₁ to C₄ alkyl groups, unsubstituted alkyl groups, a substituted C₁ to C₄ alkoxy group and an unsubstituted C₁ to C₄ alkoxy group. The preferred aryl groups phenyl groups. Preferably the aryl groups are not further substituted or are substituted by a methyl group.

In preferred compounds of the general formula (I)
- E: signifies NH₂ or OH
- R¹: signifies H or a sulpho group,
- R²: signifies H or a sulpho group,
- R³: signify H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group,
- R⁴: signifies H, a substituted C₁ to C₄ alkyl group or an unsubstituted C₁ to C₄ alkyl group, a substituted C₁ to C₄ alkoxy group or an unsubstituted C₁ to C₄ alkoxy group,
- B: a group with the formula -CR⁵R⁶-, wherein
- R⁵: signifies H, an unsubstituted C₁ to C₉ alkyl group, preferably H or -CH₃,
- R⁶: signifies a substituted C₁ to C₉ alkyl group or an unsubstituted C₁ to C₉ alkyl group, an unsubstituted aryl group or a substituted aryl group or R⁵ and R⁶ form together a five or six membered cyclo aliphatic ring, wherein the five or six membered rings are substituted by a C₁ to C₄ alkyl group or the five or six membered rings are not further substituted.

In even more preferred compounds of the general formula (I)
- E: signifies OH
- R¹: signifies H or a sulpho group,
- R²: signifies H or a sulpho group,
- R³: signify H, a sulpho group, a substituted C₁ to C₂ alkyl group or an unsubstituted C₁ to C₂ alkyl group, a substituted C₁ to C₂ alkoxy group or an unsubstituted C₁ to C₂ alkoxy group,
- R⁴: signifies H, a substituted C₁ to C₂ alkyl group or an unsubstituted C₁ to C₂ alkyl group, a substituted C₁ to C₂ alkoxy group or an unsubstituted C₁ to C₂ alkoxy group,
- B: a group with the formula -SO₂ -CR⁵R⁶-, wherein
- R⁵: signifies H, an unsubstituted C₁ to C₉ alkyl group, preferably H or -CH₃,
- R⁶: signifies a substituted C₁ to C₉ alkyl group or an unsubstituted C₁ to C₉ alkyl group, an unsubstituted aryl group or a substituted aryl group or R⁵ and R⁶ form together a five or six membered cyclo aliphatic ring, wherein the five or six membered rings are substituted by a C₁ to C₄ alkyl group or the five or six membered rings are not further substituted.

In the most preferred compounds of the general formula (I)
- E: signifies OH
- R¹: signifies a sulpho group,
- R²: signifies H,
- R³: signify H, a sulpho group, a substituted C₁ to C₂ alkyl group or an unsubstituted C₁ to C₂ alkyl group, a substituted C₁ to C₂ alkoxy group or an unsubstituted C₁ to C₂ alkoxy group,
- R⁴: signifies H, a substituted C₁ to C₂ alkyl group or an unsubstituted C₁ to C₂ alkyl group, a substituted C₁ to C₂ alkoxy group or an unsubstituted C₁ to C₂ alkoxy group,
- B: a group with the formula -CR⁵R⁶-, wherein
- R⁵: signifies H,
- R⁶: signifies a substituted C₁ to C₉ alkyl group or an unsubstituted C₁ to C₉ alkyl group, an unsubstituted phenyl group or a substituted phenyl group or R⁵ and R⁶ form together a six membered cyclo aliphatic ring, wherein the six membered rings a are not further substituted.

The preferred group R⁶ signifies an unsubstituted C₁ to C₉ alkyl group, preferably -CH₃, -(CH₂CH(CH₃)₂), -(CH(CH₂CH₃)₂) or -C(CH₂CH₃)(CH₂CH₂CH₂CH₃)- or an unsubstituted phenyl group or R⁶ signifies a substituted phenyl preferably a paratolyl group. The preferred group R⁵ signifies H.

The invention also provides a process for preparing compounds of the formula (I). The present invention's compounds of the formula (I) can be prepared under conventional conditions in conventional processes.

The present invention further provides a process for the preparation of compounds of formula (I) comprising reacting the bis -diazonium salt of an di-amine of formula (II), 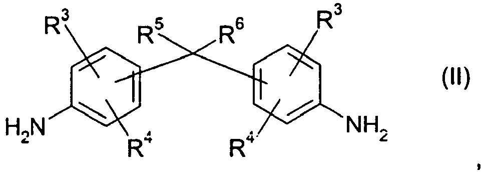 with one equivalent compound of formula (III). 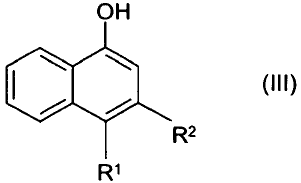 where the substituents are each as defined above.

In these processes, the particular diamine is cooled to 0 - 10 °C or preferably to 0 - 5 °C and diazotized by adding nitrosylsulphuric acid or sodium nitrite. Afterwards, the bis-diazotized diamine is allowed to react with the compound (III), preferably in aqueous solution.

The dyes of the formula (I) can be isolated from the reaction medium by conventional processes, for example by salting out with an alkali metal salt, filtering and drying, if appropriate under reduced pressure and at elevated temperature.

Depending on the reaction and/or isolation conditions, the dyes of the formula (I) can be obtained as free acid, as salt or as mixed salt which contains for example one or more cations selected from alkali metal ions, for example the sodium ion, or an ammonium ion or alkylammonium cation, for example mono-, di- or trimethyl- or -ethylammonium cations. The dye can be converted by conventional techniques from the free acid into a salt or into a mixed salt or vice versa or from one salt form into another. If desired, the dyes can be further purified by diafiltration, in which case unwanted salts and synthesis by-products are separated from the crude anionic dye.

The removal of unwanted salts and synthesis by-products and partial removal of water from the crude dye solution is carried out by means of a semipermeable membrane by applying a pressure whereby the dye is obtained without the unwanted salts and synthesis by-products as a solution and if necessary as a solid body in a conventional manner.

The dyes of the formula (I) and their salts are particularly suitable for dyeing or printing fibrous material consisting of natural or synthetic polyamides in orange to red shades. The dyes of the formula (I) and their salts are suitable for producing Inkjet printing inks and for using these Inkjet printing inks to print fibrous material which consists of natural or synthetic polyamides or cellulose (paper for example).

The invention accordingly provides from another aspect for the use of the dyes of the formula (I), their salts and mixtures for dyeing and/or printing fibrous materials consisting of natural or synthetic polyamides. A further aspect is the production of Inkjet printing inks and their use for printing fibrous materials consisting of natural or synthetic polyamides.

Dyeing is carried out as per known processes, see for example the dyeing processes described in Ullmanns Encyklopädie der technischen Chemie, 4th Edition, 1982, Volume 22, pages 658 - 673 or in the book by M. Peter and H.K. Rouette, Grundlagen der Textilveredlung, 13th Edition, 1989, pages 535 - 556 and 566 - 574. Preference is given to dyeing in the exhaust process at a temperature of 30 to 140 °C, more preferably 80 to 120 °C and most preferably at a temperature of 80 to 100 °C, and at a liquor ratio in the range from 3:1 to 40:1.

The substrate to be dyed can be present in the form of yarn, woven fabric, loop-formingly knitted fabric or carpet for example. Fully fashioned dyeings are even permanently possible on delicate substrates, examples being lambswool, cashmere, alpaca and mohair. The dyes of the invention are particularly useful for dyeing fine-denier fibres (microfibres).

The dyes according to the present invention and their salts are highly compatible with known acid dyes. Accordingly, the dyes of the formula (I), their salts or mixtures can be used alone in a dyeing or printing process or else as a component in a combination shade dyeing or printing composition together with other acid dyes of the same class, i.e. with acid dyes possessing comparable dyeing properties, such as for example fastness properties and exhaustion rates from the dyebath onto the substrate. The dyes of the present invention can be used in particular together with certain other dyes having suitable chromophores. The ratio in which the dyes are present in a combination shade dyeing or printing composition is dictated by the hue to be obtained.

The novel dyes of the formula (I), as stated above, are very useful for dyeing natural and synthetic polyamides, i.e. wool, silk and all nylon types, on each of which dyeings having a high fastness level, especially good light fastness and good wet fastnesses (washing, alkaline perspiration) are obtained. The dyes of the formula (I) and their salts have a high rate of exhaustion. The ability of the dyes of the formula (I) and their salt to build up is likewise very good. On-tone dyeings on the identified substrates are of outstanding quality. All dyeings moreover have a constant hue under artificial light. Furthermore, the fastness to decating and boiling is good.

One decisive advantage of the novel dyes is that they are metal free and provide very level dyeings.

The compounds according to the invention can be used as an individual dye or else, owing to their good compatibility, as a combination element with other dyes of the same class having comparable dyeing properties, for example with regard to general fastnesses, exhaustion value, etc. The combination shade dyeings obtained have similar fastnesses to dyeings with the individual dye.

The invention's dyes of the formula (I) can also be used as yellow components in trichromatic dyeing or printing. Trichromatic dyeing or printing can utilize all customary and known dyeing and printing processes, such as for example the continuous process, exhaustion process, foam dyeing process and Ink-Jet process.

The composition of the individual dye components in the trichromatic dye mixture used in the process of the invention depends on the desired hue. A brown hue for example preferably utilizes 20 - 40 % by weight of the invention's yellow component, 40 - 60 % by weight of an orange or red component and 10 - 20 % by weight of a blue component.

The yellow component, as described above, can consist of a single component or of a mixture of different orange individual components conforming to the formula (I). Preference is given to double and triple combinations.

Particularly preferred red and/or blue components are described in WO2002/463 or WO99/51681 respectively.

However, novel amines according to the formula (II) may be prepared according the methods disclosed in DE399149; DE505475; DE1220863; DE1793020 (GB1129306), DE 3226889, DE 4014847 , thus more precisely either starting form aldehydes (when R⁵ is H and R⁶ is different from H) or from ketones (when both R⁵ and R⁶ are different from H) of the formula 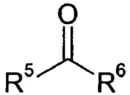 by reacting at elevated temperature and elevated pressure under acidic condition with two equivalents of an aromatic amine of the formula 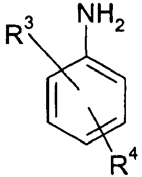 forming the diamine of the formula (II)

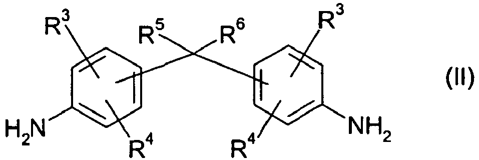

The reaction mixture is heated in a closed autoclave at 120 - 250 °C, preferably 140 - 200 °C, more preferably 140 to 150 °C the reaction mixture is kept at this temperature for 3 - 8 hours, preferably for 4 - 5 hours. The elevated temperature leads in this closed autoclave to the elevated pressure. Alternatively the synthesis may be performed in the melt of the ketone or aldehyde and the amine of the aminocompound-hydrochloride adding the ketocompound at elevated temperature 200 to 250 °C and the pressure is atmospheric pressure.

The following examples further serve to illustrate the invention. In the Examples all parts and all percentages are by weight or volume, and the temperatures given are in degrees Celsius, unless indicated to the contrary.

### Example 1: (method A)

106 g benzaldehyde, 400 g o-anisidine, 450 g hydrochloric acid (ca. 30 %) and 800 ml water were heated in an autoclave at 120 - 140 °C for 6 hours.

The reaction mixture was poured on 1 kg ice and 500 g sodium hydroxide solution (30 %).
The organic layer was separated and the excess of o-anisidine separated with toluene. The residue was re-crystallized from toluene and the press cake washed with cold alcohol. A compound of the formula (1) was obtained; Yield: 41 % 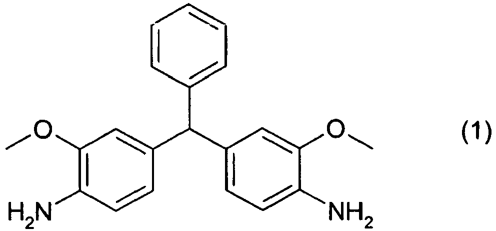 Bis-(3-methoxy- 4-aminophenyl)-phenylmethane

### Example 2: (method B)

780 g (6 mol) of aniline hydrochloride are melted in a 1.5-I reaction vessel under nitrogen at 220 °C and 100 g (1 mol) of 2-Ethylbutyraldehyde is slowly added thereto while stirring over a period of 4 hours.
The temperature of the melt falls from initially ca. 200 to 185 °C because of the reflux.
The temperature is kept for one hour at 185 °C and the hot melt is poured on a mixture of 1.6 kg ice and 1.05 kg of sodium hydroxide solution (30 %).

The organic layer is separated and washed free from salt with demineralised water. The solvent and aniline excess of anilineo-anisidine is extracted by water steam distillation.

The residue, ca. 180 g was re-crystallized from toluene and the press cake is washed with cold ethanol. A compound of the formula (2) was obtained; Yield: 48% 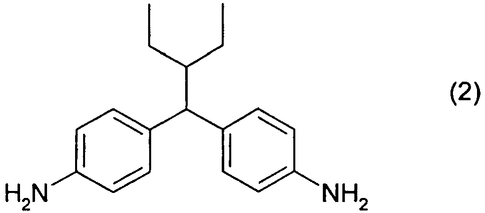 1,1-bis-(4-aminophenyl)-2-ethyl-butane

**Table 1: Synthesis of the diamines starting with aldehydes**

| | | | |
|---|---|---|---|
| 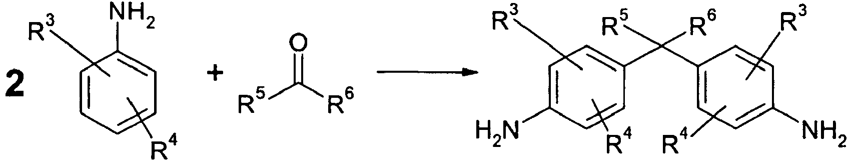 | | | |
| Nr. | 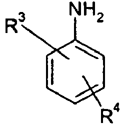 | R⁵ | R⁶ |
| 3 | 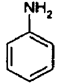 | H | CH₂CH₂CH₂CH₃ |
| 4 | 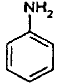 | H | CH₂CH(CH₃)₂ |
| 5 | 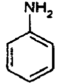 | H | CH(CH₃)CH₂CH₃ |
| 6 | 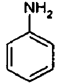 | H | CH(CH₃)CH₂CH₂CH₃ |
| 7 | 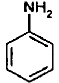 | H | (CH₂)₅CH₃ |
| 8 | 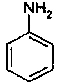 | H | (CH₂)₄CH₃ |
| 9 | 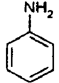 | H | CH(CH₂CH₃)(CH₂)₃CH₃ |
| 10 | 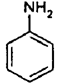 | H | (CH₂)₆CH₃ |
| 11 | 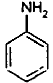 | H | (CH₂)₇CH₃ |
| 12 | 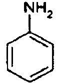 | H | (CH₂)₈CH₃ |
| 13 . | 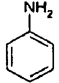 | H | CH₂-PhCH(CH₂)₅ |
| 14 | 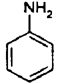 | H | CH₂-Ph |
| 15 | 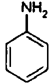 | H | 4- Ph-CH₃ |
| 16 | 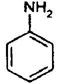 | H | 4- Ph-CH(CH₃)₂ |
| 17 | 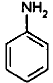 | H | 4- Ph-t-Bu |
| 18 | 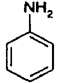 | H | 4- Ph-OCH₃ |
| 19 | 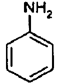 | H | 4- Ph-OCH₂CH₃ |
| 20 | 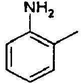 | H | CH₂CH(CH₃)₂ |
| 21 | 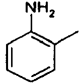 | H | CH(CH₂CH₃)₂ |
| 22 | 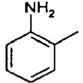 | H | Phenyl |
| 23 | 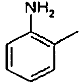 | H | 4- Ph-CH₃ |
| 24 | 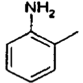 | H | 4- Ph-OCH₃ |
| 25 | 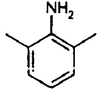 | H | CH(CH₂CH₃)₂ |
| 26 | 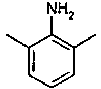 | H | Phenyl |
| 27 | 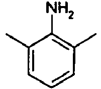 | H | 4- Ph-CH₃ |
| 28 | 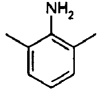 | H | 4- Ph-OCH₃ |
| 29 | 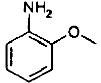 | H | CH(CH₂CH₃)₂ |
| 30 | 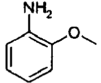 | H | CH(CH₂CH₃)(CH₂)₃CH₃ 4- Ph-CH₃ |
| 31 | 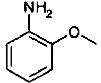 | H | 4- Ph-CH₃ |
| 32 | 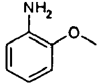 | H | 4- Ph-OCH₃ |
| 33 | 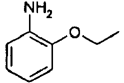 | H | CH(CH₂CH₃)₂ CH(CH₃)₂ |
| 34 | 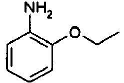 | H | CH(CH₂CH₃)(CH₂)₃CH₃ CH(CH₂CH₃)₂ |
| 35 | 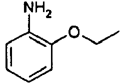 | H | Phenyl |
| 36 | 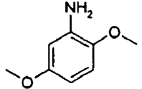 | H | CH(CH₂CH₃)₂ |
| 37 | 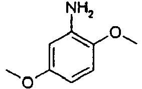 | H | CH(CH₂CH₃)(CH₂)₃CH₃ |
| 38 | 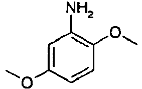 | H | Phenyl |
| 39 | 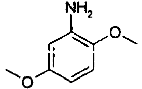 | H | 4- Ph-OCH₃ |

### Example 40: (method A)

101 g Ethyl-propylketone, 500 g o-anisidine, 500 g hydrochloric acid (ca. 30 %) and 1000 ml water were heated in an autoclave at 120 - 140 °C for 6 hours.

The reaction mixture was poured on 1 kg ice and 600 g sodium hydroxide solution (30 %).
The organic layer was separated and the excess of o-anisidine extracted with toluene. The residue was re-crystallized from toluene and the press cake washed with cold alcohol. A compound of the formula (3) was obtained; Yield: 33 % 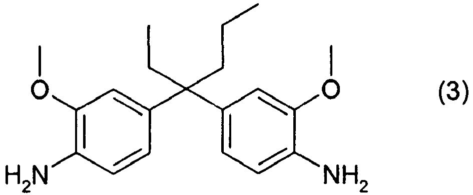 3,3-bis-(3-methoxy-4-aminophenyl)-hexane

### Example 41: (method B)

780 g (6 mol) of aniline hydrochloride are melted in a 1-I reaction vessel under nitrogen at 220 °C and 86 g (1 mol) of 3-Pentanone is slowly added thereto while stirring over a period of 3 - 4 hour.
The temperature of the melt falls from initially ca. 200 to 185 °C because of the reflux.
The temperature is kept for one hour at 185 °C and the hot melt is poured on a mixture of 1.6 kg ice and 1.05 kg of sodium hydroxide solution (30 %).

The organic layer is separated and washed free from salt with demineralised water. The solvent and aniline excess are is extracted by water steam distillation.

The residue, ca. 160 g was re-crystallized from toluene and the press cake is washed with cold ethanol. A compound of the formula (4) was obtained; Yield: 52% 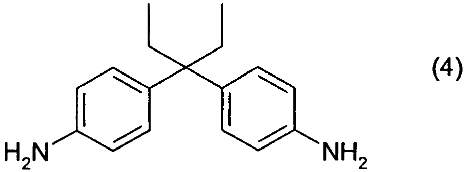 3,3-bis-(4-aminophenyl)-pentane

**Table 2: Synthesis of the diamines starting with ketones**

| | | | |
|---|---|---|---|
| 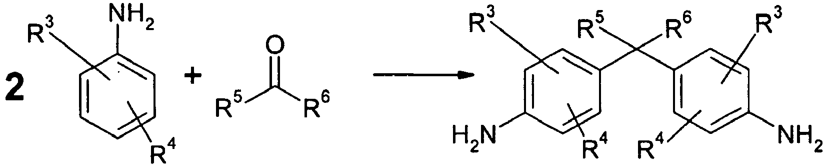 | | | |
| Nr. | 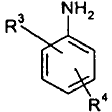 | R⁵ | R⁶ |
| 42 | 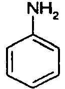 | CH₃ | CH₂CH₂CH₃ |
| 43 | 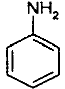 | CH₃ | CH(CH₃)₂ |
| 44 | 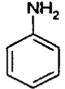 | CH₃ | CH₂CH₂CH₂CH₃ |
| 45 | 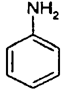 | CH₃ | CH₂CH(CH₃)₂ |
| 46 | 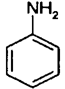 | CH₃ | CH₂CH₂CH₂CH₂CH₃ |
| 47 | 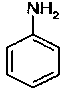 | CH₃ | CH₂CH₂CH(CH₃)₂ |
| 48 | 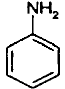 | CH₃ | CH₂CH₂CH₂CH₂CH₂CH₃ |
| 49 | 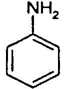 | CH₃ | CH₂Ph |
| 50 | 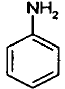 | CH₃ | CH₂CH₂Ph |
| 51 | 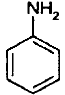 | CH₂CH₃ | CH₂CH₂CH₃ |
| 52 | 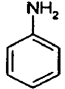 | CH₂CH₃ | CH₂CH₂CH₂CH₃ |
| 53 | 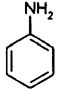 | CH₂CH₃ | CH₂CH₂CH₂CH_{z}CH₃ |
| 54 | 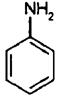 | CH₂CH₃ | CH₂CH₂CH₂CH₂CH₂CH₃ |
| 55 | 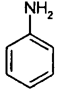 | CH₂CH₃ | CH₂CH₂CH(CH₃)₂ |
| 56 | 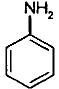 | CH₂CH₃ | CH₂CH(CH₃)CH₂CH₃ |
| 57 | 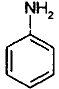 | CH₂CH₂CH₃ | CH₂CH₂CH₃ |
| 58 | 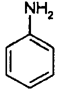 | CH(CH₃)₂ | CH(CH₃)₂ |
| 59 | 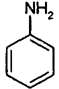 | CH₂CH₂CH₂CH₃ | CH₂CH₂CH₂CH₃ |
| 60 | 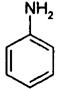 | CHCH₂(CH₃)₂ | CHCH₂(CH₃)₂ |
| 61 | 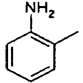 | CH₂CH₃ | CH₂CH₃ |
| 62 | 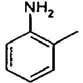 | CH₂CH₃ | CH₂CH₂CH₂CH₃ |
| 63 | 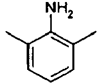 | CH₂CH₃ | CH₂CH₃ |
| 64 | 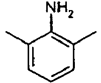 | CH₂CH₃ | CH₂CH₂CH₂CH₃ |
| 65 | 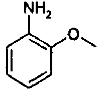 | CH₃ | CH₂CH(CH₃)₂ |
| 66 | 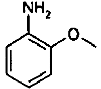 | CH₂CH₃ | CH₂CH₃ |
| 67 | 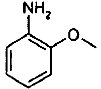 | CH₂CH₃ | CH₂CH₂CH₂CH₃ |

The following examples further serve to illustrate the invention. In the Examples all parts and all percentages are by weight or volume, and the temperatures given are in degrees Celsius, unless indicated to the contrary.

### Example 68:

33.4 Parts (0.1 mol) of 3,3'-dimethoxy-4,4'-diaminotriphenylmethane are tetrazotised according to known methods with 13.8 parts (0.2 mol) of sodium nitrite at 0 - 5 °C in 250 parts of water and 60 parts of hydrochloric acid (ca. 30 %). 22.4 parts (0.1 mol) of a compound of the formula 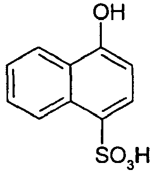 dissolved in 250 parts of water are added over 30 minutes to the ice cold tetrazotised solution. By the addition of 30 % NaOH solution the pH is brought to 5-6 yielding a dyestuff of formula 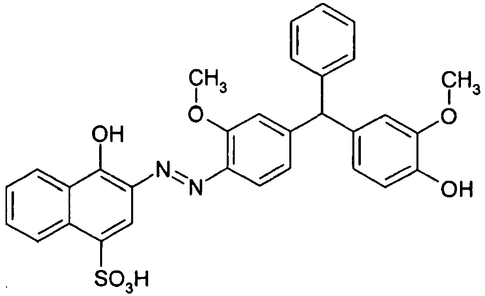 and the dyestuff is in solution. λ max = 550 nm.
The dyestuff can be isolated by concentration under vacuum or by precipitation in aceton/alcohol. The reaction mixture however can be used directly for dyeing without isolation the product. The dyestuff has surprisingly very high solubility in water and gives red dyeings with very good fastness properties.

### Example 69:

30.2 Parts (0.1 mol) of 3,3'-Dimethyl-4,4'-diaminotriphenylmethane are tetrazotised according to known methods with 13.8 parts (0.2 mol) of sodium nitrite at 0 - 5 °C in 200 parts of water and 60 parts of hydrochloric acid (ca. 30 %). 32.3 parts (0.1 mol) of a compound of the formula 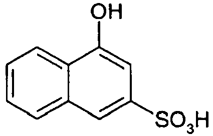 dissolved in 350 parts of water are added over 30 minutes to the ice cold tetrazotised solution. By the addition of 30 % NaOH solution the pH is brought to 5-6 yielding a dyestuff of formula 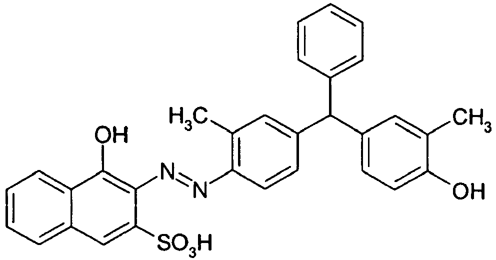 and the dyestuff is in solution. λ max = 548 nm.
The dyestuff can be isolated by concentration under vacuum or by precipitation in aceton/alcohol.

The reaction mixture however can be used directly for dyeing without isolation the product.
The dyestuff has very high solubility in water and gives red dyeings with surprisingly very good fastnes properties.

### Examples 70-87:

The following compounds shown in the table 3 were synthesized according to the example 68 or 69 using the diamine 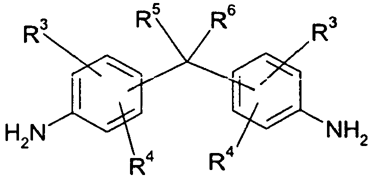 as diazo component and reacted with coupling component 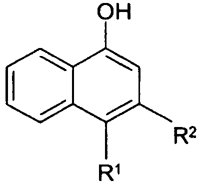 wherein a compound of the following formula was obtained: 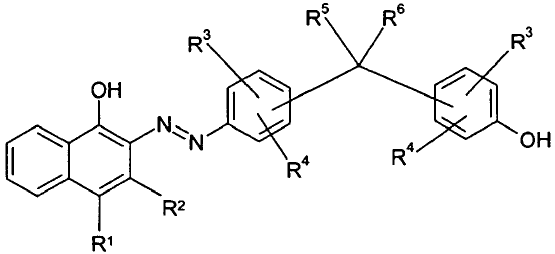 in which R¹, R², R³, R⁴, R⁵ and R⁶ are defined as above defined.
λ max (lambda max) is indicated in nm (nano meters; measured in 1 % acetic acid solution).

**Table 3:**

| Example | Diamine | coupling component | □ₘₐₓ [nm] |
|---|---|---|---|
| 70 | 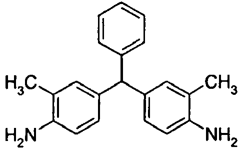 | 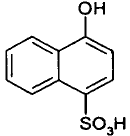 | 498 |
| 71 | 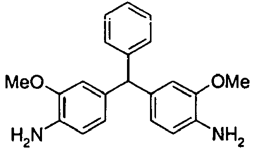 | 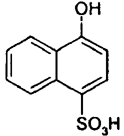 | 499 |
| 72 | 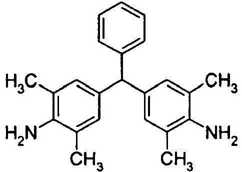 | 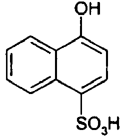 | 503 |
| 73 | 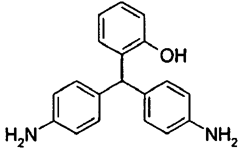 | 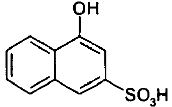 | 497 |
| 74 | 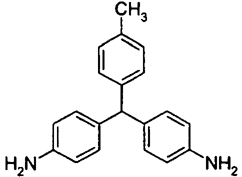 | 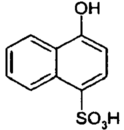 | 490 |
| 75 | 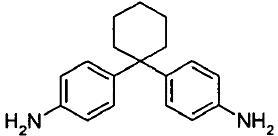 | 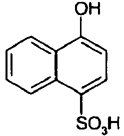 | 493 |
| 76 | 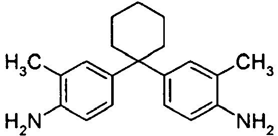 | 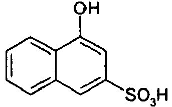 | 498 |
| 77 | 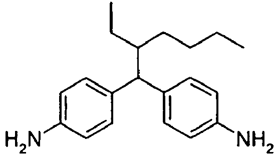 | 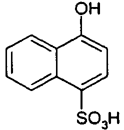 | 489 |
| 78 | 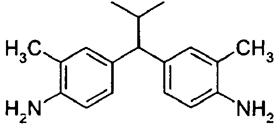 | 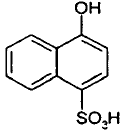 | 486 |
| 79 | 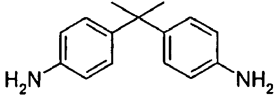 | 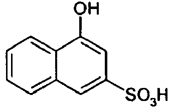 | 491 |
| 80 | 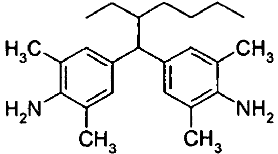 | 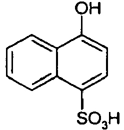 | 501 |
| 81 | 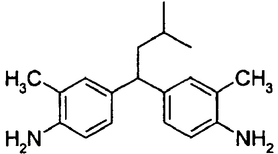 | 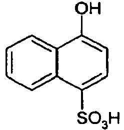 | 496 |
| 82 | 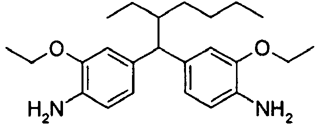 | 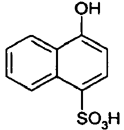 | 510 |
| 83 | 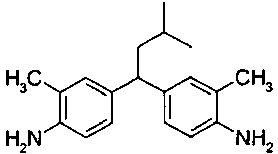 | 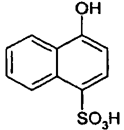 | 500 |
| 84 | 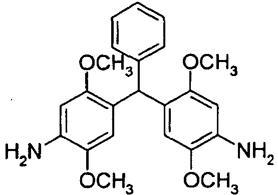 | 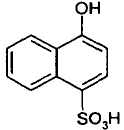 | 515 |
| 85 | 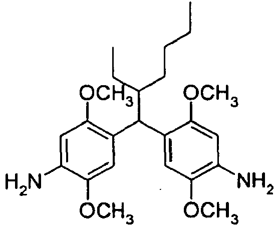 | 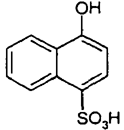 | 517 |
| 86 | 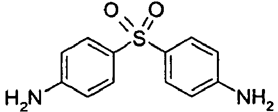 | 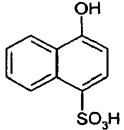 | 449 |
| 87 | 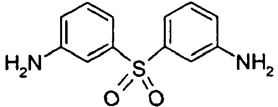 | 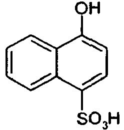 | 452 |

### USE EXAMPLE A

A dyebath at 40 °C, consisting of 2000 parts of water, 1 part of a weakly cation-active levelling agent which is based on an ethoxylated aminopropyl fatty acid amide and which has affinity for dye, 0.25 part of the dye of Preparation Example 68 and adjusted to pH 5 with 1-2 parts of 40 % acetic acid is entered with 100 parts of nylon-6 fabric. After 10 minutes at 40 °C, the dyebath is heated to 98 °C at a rate of 1 °C per minute and then left at the boil for 45 - 60 minutes. Thereafter it is cooled down to 70 °C over 15 minutes. The dyeing is removed from the bath, rinsed with hot and then with cold water and dried. The result obtained is a red polyamide dyeing possessing good light and wet fastnesses.

### USE EXAMPLE B

A dyebath at 40 °C, consisting of 2000 parts of water, 1 part of a weakly cation-active levelling agent which is based on an ethoxylated aminopropyl fatty acid amide and which has affinity for dye, 0.3 part of the dye of Preparation Example 68 and adjusted to pH 5.5 with 1 - 2 parts of 40 % acetic acid is entered with 100 parts of nylon-6,6 fabric. After 10 minutes at 40 °C, the dyebath is heated to 120 °C at a rate of 1.5 °C per minute and then left at this temperature for 15 - 25 minutes. Thereafter it is cooled down to 70 °C over 25 minutes. The dyeing is removed from the dyebath, rinsed with hot and then with cold water and dried. The result obtained is a red polyamide dyeing with good levelness and having good light and wet fastnesses.

### USE EXAMPLE C

A dyebath at 40 °C, consisting of 4000 parts of water, 1 part of a weakly amphoteric levelling agent which is based on a sulphated, ethoxylated fatty acid amide and which has affinity for dye, 0.4 part of the dye of Preparation Example 68 and adjusted to pH 5 with 1 - 2 parts of 40 % acetic acid is entered with 100 parts of wool fabric. After 10 minutes at 40 °C, the dyebath is heated to boiling at a rate of 1 °C per minute and then left at the boil for 40 - 60 minutes. Thereafter it is cooled down to 70 °C over 20 minutes. The dyeing is removed from the bath, rinsed with hot and then with cold water and dried. The result obtained is a red wool dyeing possessing good light and wet fastnesses.

### USE EXAMPLE D

100 parts of a woven nylon-6 material are padded with a 50 °C liquor consisting of
- 40: parts of the dye of Preparation Example 68,
- 100: parts of urea,
- 20: parts of a nonionic solubilizer based on butyldiglycol,
- 15- 20: parts of acetic acid (to adjust the pH to 4),
- 10: parts of a weakly cation-active levelling agent which is based on an ethoxylated aminopropyl fatty acid amide and has affinity for dye, and
- 810-815: parts of water (to make up to 1000 parts of padding liquor).

The material thus impregnated is rolled up and left to dwell in a steaming chamber under saturated steam conditions at 85 - 98 °C for 3 - 6 hours for fixation. The dyeing is then rinsed with hot and cold water and dried. The result obtained is a red nylon dyeing having good levelness in the piece and good light and wet fastnesses.

### USE EXAMPLE E

A textile cut pile sheet material composed of nylon-6 and having a synthetic base fabric is padded with a liquor containing per 1000 parts
- 1: part of dye of Preparation Example 68
- 4: parts of a commercially available thickener based on carob flour ether
- 2: parts of a nonionic ethylene oxide adduct of a higher alkylphenol
- 1: part of 60 % acetic acid.

This is followed by printing with a paste which per 1000 parts contains the following components:
- 20: parts of commercially available alkoxylated fatty alkylamine (displace product)
- 20: parts of a commercially available thickener based on carob flour ether.

The print is fixed for 6 minutes in saturated steam at 100 °C, rinsed and dried. The result obtained is a level-coloured cover material having a red and white pattern.

### USE EXAMPLE F

100 parts of a chrome-tanned and synthetically retanned shave-moist grain leather are dyed for 30 minutes in a bath of 300 parts of water and 2 parts of the dye of Preparation Example 68 at 55 °C. After addition of 4 parts of a 60 % emulsion of a sulphited fish oil, the leather is fatliquored for 45 minutes. It is then acidified with 8.5 % formic acid and milled for 10 minutes (final pH in the bath 3.5 - 4.0). The leather is then rinsed, allowed to drip dry and finished as usual. The result obtained is a leather dyed in a level clear red hue with good fastnesses.

Use Examples A to F can also be carried out with dyes 69 to 87 with similar results.

### USE EXAMPLE G

3 parts of the dye of Preparation Example 68 are dissolved in 82 parts of demineralized water and 15 parts of diethylene glycol at 60 °C. Cooling down to room temperature gives a red printing ink which is very highly suitable for ink jet printing on paper or polyamide and wool textiles.

Use Example G can also be carried out with dyes 69 to 87 with similar results.

### USE EXAMPLE H

A dyebath consisting of 1000 parts of water, 80 parts of calcined Glauber salt, 1 part of sodium nitrobenzene-3-sulphonate and 1 part of dye from Example 68 is heated to 80 °C in the course of 10 minutes. Then, 100 parts of mercerized cotton are added. This is followed by dyeing at 80 °C for 5 minutes and then heating to 95 °C in the course of 15 minutes. After 10 minutes at 95 °C, 3 parts of sodium carbonate are added, followed by a further 7 parts of sodium carbonate after 20 minutes and another 10 parts of sodium carbonate after 30 minutes at 95 °C. Dyeing is subsequently continued at 95 °C for 60 minutes. The dyed material is then removed from the dyebath and rinsed in running demineralized water for 3 minutes. This is followed by two washes for 10 minutes in 5000 parts of boiling demineralized water at a time and subsequent rinsing in running demineralized water at 60 °C for 3 minutes and with cold tap water for one minute. Drying leaves a red cotton dyeing having good fastnesses.

### USE EXAMPLE I

0.2 part of the dye of Preparation Example 68 is dissolved in 100 parts of hot water and the solution is cooled down to room temperature. This solution is added to 100 parts of chemically bleached sulphite pulp beaten in 2000 parts of water in a Hollander. After 15 minutes of commixing the stuff is sized with resin size and aluminium sulphate in a conventional manner. Paper produced from this stuff has a red shade with good wet fastnesses.

Use Examples H and I can also be carried out with dyes 69 to 87 with similar results.

## Claims

1. Compounds of the general formula (I) 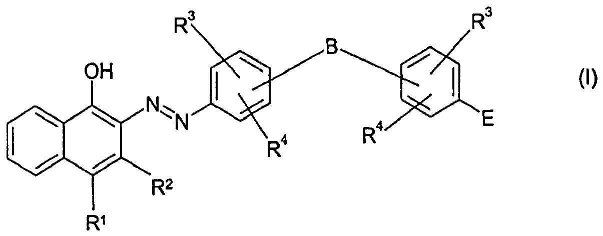
R¹ signifies H or a sulpho group
R² signifies H or a sulpho group, R¹ has to be different from R².
R³ signifies H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group,
R⁴ signifies H, a substituted C₁ to C₄ alkyl group or an unsubstituted C₁ to C₄ alkyl group, a substituted C₁ to C₄ alkoxy group or an unsubstituted C₁ to C₄ alkoxy group,
B signifies a group with the formula -SO₂-, -CR⁵R⁶-, wherein
R⁵ signifies H, substituted C₁ to C₉ alkyl group or an unsubstituted C₁ to C₉ alkyl group,
R⁶ signifies a substituted C₁ to C₉ alkyl group or an unsubstituted C₁ to C₉ alkyl group, an unsubstituted aryl group or a substituted aryl group or R⁵ and R⁶ form together a five or six membered cyclo aliphatic ring, wherein the five or six membered rings are substituted by a C₁ to C₄ alkyl group or the five or six membered rings are not further substituted.,
E signifies NH₂ or OH.

2. Compounds according to claim 1 **characterized in that** the compounds of formula (I) bear at least one anionic substituent

3. Compounds according to claim 2 **characterized in that**
R¹ signifies H or a sulpho group
R² signifies H or a sulpho group, R¹ has to be different from R²
R³ signifies H, a substituted C₁ to C₂ alkyl group or an unsubstituted C₁ to C₂ alkyl group, a substituted C₁ to C₂ alkoxy group or an unsubstituted C₁ to C₂ alkoxy group,
R⁴ signifies H, a substituted C₁ to C₂ alkyl group or an unsubstituted C₁ to C₂ alkyl group, a substituted C₁ to C₂ alkoxy group or an unsubstituted C₁ to C₂ alkoxy group,
B signifies a group with the formula -CR⁵R⁶-, wherein
R⁵ signifies H, an unsubstituted C₁ to C₉ alkyl group,
R⁶ signifies a substituted C₁ to C₉ alkyl group or an unsubstituted C₁ to C₉ alkyl group, an unsubstituted aryl group or a substituted aryl group or R⁵ and R⁶ form together a five or six membered cyclo aliphatic ring, wherein the five or six membered rings are substituted by a C₁ to C₄ alkyl group or the five or six membered rings are not further substituted.

4. Process for preparing compounds of the formula (I) according to Claim 1, **characterized in that** both the amine functions of the compounds of the formula (II) 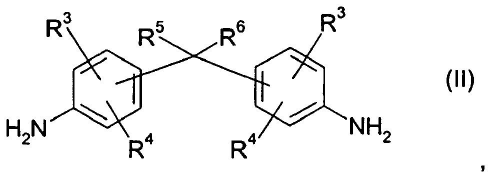 are diazotized and coupled onto one equivalent of a compound of the formula (III) 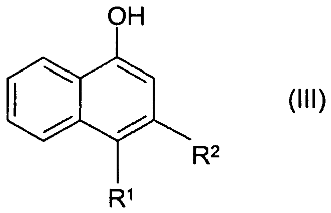 where the substituents are each as defined above.

5. Use of the compounds of the formula (I) according to Claim 1 for dyeing and/or printing organic substrates.

6. Use of compounds of formula (I) according to Claim 1 for dyeing and/or printing wool, silk and synthetic polyamides.

7. Use of compounds of formula (I) according to Claim 1 for preparing printing inks for the InkJet process.

## Patentansprüche

1. Verbindungen der allgemeinen Formel (I) 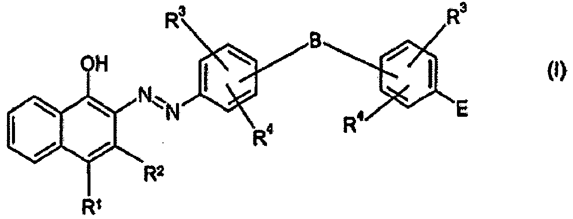 worin
R¹ H oder eine Sulfogruppe bedeutet,
R² H oder eine Sulfogruppe bedeutet, R¹ von R² verschieden sein muss,
R³ H, eine Sulfogruppe, eine substituierte C₁- bis C₄-Alkylgruppe oder eine unsubstituierte C₁- bis C₄-Alkylgruppe, eine substituierte C₁- bis C₄-Alkoxygruppe oder eine unsubstituierte C₁- bis C₄-Alkoxygruppe bedeutet,
R⁴ H, eine substituierte C₁- bis C₄-Alkylgruppe oder eine unsubstituierte C₁- bis C₄-Alkylgruppe eine substituierte C₁- bis C₄-Alkoxygruppe oder eine unsubstituierte C₁- bis C₄-Alkoxygruppe bedeutet,
B eine Gruppe mit der Formel -SO₂-, -CR⁵R⁶- bedeutet, worin
R⁵ H, eine substituierte C₁- bis C₉-Alkylgruppe oder eine unsubstituierte C₁- bis C₉-Alkylgruppe bedeutet,
R⁶ eine substituierte C₁- bis C₉-Alkylgruppe oder eine unsubstituierte C₁- bis C₉-Alkylgruppe, eine unsubstituierte Arylgruppe oder eine substituierte Arylgruppe bedeutet, oder R⁵ und R⁶ zusammen einen fünf- oder sechsgliedrigen cycloaliphatischen Ring bilden, wobei die fünf- oder sechsgliedrigen Ringe durch eine C₁- bis C₄-Alkylgruppe substituiert sind oder die fünf- oder sechsgliedrigen Ringe nicht weiter substituiert sind,
E NH₂ oder OH bedeutet.

2. Verbindungen nach Anspruch 1, **dadurch gekennzeichnet, dass** die Verbindungen der Formel (I) mindestens einen anionischen Substituenten tragen.

3. Verbindungen nach Anspruch 2, **dadurch gekennzeichnet, dass**
R¹ H oder eine Sulfogruppe bedeutet,
R² H oder eine Sulfogruppe bedeutet, R¹ von R² verschieden sein muss,
R³ H, eine substituierte C₁- bis C₂-Alkylgruppe oder eine unsubstituierte C₁- bis C₂-Alkylgruppe, eine substituierte C₁- bis C₂-Alkoxygruppe oder eine unsubstituierte C₁- bis C₂-Alkoxygruppe bedeutet,
R⁴ H, eine substituierte C₁- bis C₂-Alkylgruppe oder eine unsubstituierte C₁- bis C₂-Alkylgruppe, eine substituierte C₁- bis C₂-Alkoxygruppe oder eine unsubstituierte C₁- bis C₂-Alkoxygruppe bedeutet,
B eine Gruppe mit der Formel -CR⁵R⁶- bedeutet, worin R⁵ H, eine substituierte C₁- bis C₉-Alkylgruppe bedeutet,
R⁶ eine substituierte C₁- bis C₉-Alkylgruppe oder eine unsubstituierte C₁- bis C₉-Alkylgruppe, eine unsubstituierte Arylgruppe oder eine substituierte Arylgruppe bedeutet, oder R⁵ und R⁶ zusammen einen fünf- oder sechsgliedrigen cycloaliphatischen Ring bilden, wobei die fünf- oder sechsgliedrigen Ringe durch eine C₁- bis C₄-Alkylgruppe substituiert sind oder die fünf- oder sechsgliedrigen Ringe nicht weiter substituiert sind.

4. Verfahren zur Herstellung von Verbindungen der Formel (I) gemäß Anspruch 1, **dadurch gekennzeichnet, dass** man beide Aminfunktionen der Verbindungen der Formel (II) 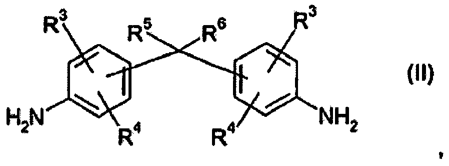 diazotiert und auf ein Äquivalent einer Verbindung der Formel (III) 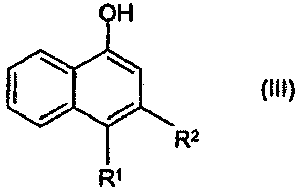 kuppelt, wobei die Substituenten jeweils die oben angegebenen Bedeutungen haben.

5. Verwendung der Verbindungen der Formel (I) gemäß Anspruch 1 zum Färben und/oder Bedrucken von organischen Substraten.

6. Verwendung von Verbindungen der Formel (I) gemäß Anspruch 1 zum Färben und/oder Bedrucken von Wolle, Seide und synthetischen Polyamiden.

7. Verwendung von Verbindungen der Formel (I) gemäß Anspruch 1 zur Herstellung von Drucktinten für das InkJet-Verfahren.

## Revendications

1. Composés de la formule générale (I) 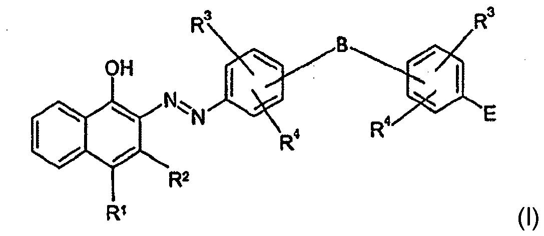
R¹ désigne H ou un groupe sulfo
R² désigne H ou un groupe sulfo, R¹ doit être différent de R²
R³ désigne H, un groupe sulfo, un groupe alkyle en C₁ à C₄ substitué ou un groupe alkyle en C₁ à C₄ non substitué, un groupe alcoxy en C₁ à C₄ substitué ou un groupe alcoxy en C₁ à C₄ non substitué,
R⁴ désigne H, un groupe alkyle en C₁ à C₄ substitué ou un groupe alkyle en C₁ à C₄ non substitué, un groupe alcoxy en C₁ à C₄ substitué ou un groupe alcoxy en C₁ à C₄ non substitué,
B désigne un groupe ayant la formule -So₂-,-CR⁵R⁶-, où R⁵ désigne H, un groupe alkyle en C₁ à C₉ substitué ou un groupe alkyle en C₁ à C₉ non substitué,
R⁶ désigne un groupe alkyle en C₁ à C₉ substitué ou un groupe alkyle en C₁ à C₉ non substitué, un groupe aryle non substitué ou un groupe aryle substitué ou R⁵ et R⁶ forment conjointement un cycle cycloaliphatique de cinq ou six chaînons, les cycles de cinq ou six chaînons étant substitués par un groupe alkyle en C₁ à C₄ ou les cycles de cinq ou six chaînons n'étant pas substitués plus avant,
E désigne NH₂ ou OH.

2. Composés selon la revendication 1 **caractérisés en ce que** les composés de formule (I) comportent au moins un substituant anionique.

3. Composés selon la revendication 2 **caractérisés en ce que**
R¹ désigne H ou un groupe sulfo
R² désigne H ou un groupe sulfo, R¹ doit être différent de R².
R³ désigne H, un groupe alkyle en C₁ à C₂ substitué ou un groupe alkyle en C₁ à C₂ non substitué, un groupe alcoxy en C₁ à C₂ substitué ou un groupe alcoxy en C₁ à C₂ non substitué,
R⁴ désigne H, un groupe alkyle en C₁ à C₂ substitué ou un groupe alkyle en C₁ à C₂ non substitué, un groupe alcoxy en C₁ à C₂ substitué ou un groupe alcoxy en C₁ à C₂ non substitué,
B désigne un groupe ayant la formule -CR⁵R⁶-, où
R⁵ désigne H, un groupe alkyle en C₁ à C₉ non substitué,
R⁶ désigne un groupe alkyle en C₁ à C₉ substitué ou un groupe alkyle en C₁ à C₉ non substitué, un groupe aryle non substitué ou un groupe aryle substitué ou R⁵ et R⁶ forment conjointement un cycle cycloaliphatique de cinq ou six chaînons, les cycles de cinq ou six chaînons étant substitués par un groupe alkyle en C₁ à C₄ ou les cycles de cinq ou six chaînons n'étant pas substitués plus avant.

4. Procédé pour préparer des composés de la formule (I) selon la revendication 1,
**caractérisé en ce que** les deux fonctions amine des composés de la formule (II) 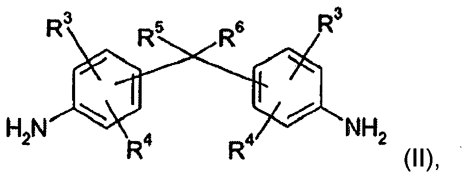 sont diazotées et couplées sur un équivalent d'un composé de la formule (III) 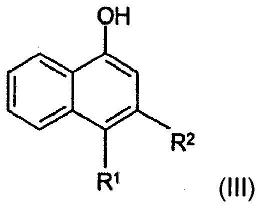 où les substituants sont chacun tels que définis ci-dessus.

5. Utilisation des composés de la formule (I) selon la revendication 1 pour colorer et/ou imprimer des substrats organiques.

6. Utilisation de composés de formule (I) selon la revendication 1 pour colorer et/ou imprimer de la laine, de la soie et des polyamides synthétiques.

7. Utilisation de composés de formule (I) selon la revendication 1 pour préparer des encres d'impression pour le procédé à jet d'encre.
